# FASCICULE DE BREVET EUROPEEN

(11) **EP 3 485 501 B1**
(45) Date de publication et mention de la délivrance du brevet: **18.03.2020**
(21) Numéro de dépôt: 17742826.5
(22) Date de dépôt: 07.07.2017
(51) Int. Cl.: H01H 33/56, F17C 5/06, H02B 13/055

(54) **DISTRIBUTION D'UN MÉLANGE GAZEUX DIÉLECTRIQUE VERS UN APPAREILLAGE HAUTE TENSION**
VERTEILUNG EINES DIELEKTRISCHEN GASGEMISCHS AN EINE HOCHSPANNUNGSVORRICHTUNG
DISTRIBUTION OF A DIELECTRIC GASEOUS MIXTURE TO A HIGH-VOLTAGE APPARATUS

(30) Priorité: 13.07.2016 FR 1656763
(43) Date de publication de la demande: 22.05.2019
(73) Titulaire: L'Air Liquide Société Anonyme pour l'Etude et l'Exploitation des Procédés Georges Claude, 75007 Paris (FR)
(72) Inventeur: LORAY, Frédéric, 38130 Echirolles (FR); DULPHY, Hervé, 38560 Jarrie (FR); SATIN, Ariel, 38560 Jarrie (FR)
(74) Mandataire: Debecker, Isabelle Virginie
(86) Numéro de dépôt international: PCT/FR2017/051854
(87) Numéro de publication internationale: WO 2018/011489

(56) Documents cités:
- EP-A2- 1 538 390
- WO-A1-2014/037031
- DE-A1-102014 119 028
- FR-A1- 3 023 649

## Description

La présente invention concerne un procédé de distribution d'un mélange gazeux liquéfié isolant diélectrique vers un appareillage électrique haute tension.

Le terme d'appareillage électrique haute-tension désigne dans la présente description, aussi bien les appareils constituant les postes de distribution haute-tension que les lignes haute-tension de transport d'énergie.

Les postes haute-tension à isolation gazeuse sont connus sous le nom de Poste Sous Enveloppe Métallique (PSEM).

Les lignes haute-tension à isolation gazeuse sont connues sous le nom de Ligne à Isolation Gazeuse (LIG). Dans la présente description, le terme haute-tension désigne une tension supérieure ou égale à 12000 volts, en courant alternatif ou continu.

Dans la présente description, le terme moyen de stockage désigne un récipient fermé de stockage de gaz ou de mélange. Il s'agit aussi bien de bouteille de gaz que de container.

Une des principales technologies d'isolation des appareillages électriques est l'isolation par un gaz ou mélange gazeux diélectrique confiné sous pression autour des pièces et éléments sous tension. Ce gaz ou mélange gazeux isolant permet aussi de réaliser la fonction d'extinction de l'arc issu de la coupure électrique.

Actuellement, le gaz le plus souvent utilisé dans ce type d'appareil est l'hexafluorure de soufre (SF₆). Ce gaz présente, en effet, une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son prix est, encore aujourd'hui, modéré. Toutefois, le SF₆ a pour inconvénient majeur de présenter un potentiel de réchauffement global (PRG ou GWP pour « Global Warming Potential ») de 22 200 (relativement au CO₂ sur 100 ans) et une durée de séjour dans l'atmosphère de 3200 ans, ce qui le place parmi les gaz à fort pouvoir d'effet de serre.

Le SF₆ a donc été inscrit par le Protocole de Kyoto (1997) sur la liste des gaz dont les émissions doivent être limitées.

Le meilleur moyen de limiter les émissions du SF₆ consiste à limiter l'utilisation de ce gaz, ce qui a conduit les industriels à chercher des alternatives au SF₆. Les gaz dits « simples » comme l'air ou l'azote, qui n'ont pas d'impact négatif sur l'environnement, présentent une rigidité diélectrique beaucoup plus faible que celle du SF₆. Ainsi, par exemple, les rigidités diélectriques en tension alternative (50 Hz) de l'air et de l'azote sont sensiblement trois fois plus faibles que celle du SF₆.

De ce fait, l'utilisation de ces gaz simples pour l'isolation électrique et/ou l'extinction d'arc électrique dans des appareils électriques implique d'augmenter de façon drastique le volume et/ou la pression de remplissage de ces appareils, ce qui va à l'encontre des efforts qui ont été réalisés au cours de ces dernières décennies pour développer des appareils électriques compacts et sûrs pour le personnel et à encombrement de plus en plus réduit.

Une rupture technologique s'engage dans le domaine de l'appareillage haute-tension isolé au gaz SF₆. Face aux contraintes environnementales et réglementaires (protocole de Kyoto et COP21), une reconversion de la technologie SF₆ s'opère pour trouver des mélanges gazeux de substitution ayant un impact environnemental réduit.

Un gaz liquéfié stocké dans un moyen de stockage est composé de deux phases, liquide et gazeuse, en équilibre l'une avec l'autre. Cet équilibre implique qu'à une température donnée, un gaz liquéfié a une pression bien déterminée et que cette pression varie en fonction de la température, selon une relation, dite de Clapeyron, dont les paramètres sont propres à chaque gaz.

Lorsque l'on soutire la phase gazeuse d'une bouteille de gaz liquéfié, une partie du liquide doit être vaporisée de manière à régénérer la phase gazeuse à mesure qu'elle est utilisée afin de maintenir l'équilibre. Le liquide se met donc à refroidir du fait de l'énergie utilisée pour passer d'une phase vers l'autre.

Pour éviter ces problèmes, il faut fournir l'énergie nécessaire pour compenser cette perte. Si l'énergie n'est pas suffisante et assez rapide pour gazéifier le liquide et régénérer ainsi la phase vapeur, la température, le débit et la pression chutent.

Une solution consiste à chauffer la bouteille en contrôlant la chauffe à l'aide de la pression dans la bouteille.

Cela permet de chauffer tant que la pression est inférieure à la pression correspondant à la température ambiante et de ne plus chauffer si le liquide atteint ou est à température ambiante. En régulant l'apport d'énergie correspondant à une température légèrement inférieure à la température ambiante, il est possible de s'affranchir du traçage du réseau de distribution sous réserve qu'il n'y ait pas de point froid le long de celui-ci. Un tel système est décrit dans les brevets US5761911, US6076359, et US6199384. D'ailleurs, le document WO 2014/037031 A1 divulgue un procédé de distribution d'un mélange gazeux liquéfié isolant électrique vers un appareillage électrique à haute tension.

D'une manière générale, les techniques de chauffage utilisées pour augmenter les débits de gaz liquéfiés consistent à chauffer les parois de la bouteille à l'aide d'un élément chauffant résistif de type ceinture chauffante, cordon chauffant, ou coquille à circulation de fluide caloporteur. Ce type de chauffage présente l'inconvénient d'un transfert d'énergie fortement limité par la faible conduction thermique de l'élément chauffant vers la bouteille, d'une part, et par l'augmentation de l'inertie thermique globale du système due à l'inertie thermique intrinsèque à l'élément chauffant d'autre part. Il en résulte une limitation du débit utilisable malgré un apport d'énergie conséquent et un décalage par rapport à la demande de gaz. En d'autres termes, la réponse énergétique de telles installations est insuffisante.

La demanderesse a développé dans le passé un procédé, l'AVP pour All Vapeur Phase. Le principe était basé sur la mesure de la pression dans la ligne de distribution, au plus près du fût. Ce qui permettait de déterminer la température du liquide à partir de la relation de Clapeyron. En connaissant la température, et à partir des modèles thermiques développés, il était possible d'estimer l'énergie nécessaire pour stabiliser la température. La température à l'intérieur des fûts était très stable, basée sur une estimation à partir de la pression mesurée.

Cependant, avec cette approche résistive pour chauffer, le rendement était faible et la réponse trop tardive.

Ces dernières années, la demanderesse a développé une ceinture inductive pour optimiser les transferts énergétiques et ainsi atteindre des débits de distribution plus élevés. Le principe consiste à exploiter les propriétés ferro-magnétique de l'enveloppe du récipient et à la chauffer par des moyens d'induction électromagnétique. Nous avons ainsi constaté que l'on obtenait un rendement bien supérieur pouvant atteindre 80% à 90% sur de l'acier par exemple.

Le chauffage par induction permet de s'affranchir du transfert d'énergie par conduction puisque les courants induits par l'inducteur chauffent directement le matériau de la bouteille dans son épaisseur. On constate ainsi des performances de cinq à dix fois supérieures aux performances d'un système de chauffage utilisant un élément chauffant à puissance installée égale, par exemple pour un gaz liquéfié tel que le C₄F₈, sans engendrer de désorption substantielle d'impuretés de la surface du récipient.

En alternative au SF₆, un des grands acteurs de l'appareillage haute-tension a mis au point un mélange de gaz liquéfiés diélectrique performant. Mais il n'existe pas d'équipement permettant de réaliser les manipulations de gaz indispensables à la mise en œuvre de ce mélange dans les appareillages haute-tension.

Les difficultés existantes pour mettre en place un équipement permettant de réaliser les manipulations de gaz indispensables à la mise en œuvre de ce mélange dans les appareillages haute-tension sont par exemple les suivantes :
▪ Le mélange liquéfié est intrinsèquement non homogène dans la bouteille ou le container de stockage ;
▪ Le fait de le prélever en phase gazeuse ou liquide implique une altération des proportions respectives des constituants du mélange ;
▪ La large plage de températures ambiantes définies pour l'usage de l'équipement rendent difficile la régulation de la chauffe ;
▪ L'effet Joule-Thomson du mélange gazeux dû à la détente est cause de refroidissement du gaz et de recondensation partielle. Ce phénomène altère les proportions des constituants du mélange ;
▪ La température maximale admissible par les moyens de stockage est limitée par la réglementation afin de respecter les conditions de pression et température de conception ;
▪ La technologie résistive de chauffe de bouteilles industriellement répandue ne permet pas de régulation suffisamment précise pour atteindre la température critique recherchée sans dépasser la température maximale des bouteilles ;

Face à ces difficultés, les inventeurs de la présente invention ont élaboré un procédé permettant la distribution de mélanges liquéfiés en substitution du gaz SF₆, de façon homogène, avec une grande stabilité de la proportion originelle du mélange et un débit suffisant pour que la solution soit industriellement viable.

Toutefois, les propriétés physiques respectives des fluides composant le mélange rendent le mélange intrinsèquement hétérogène au sein du moyen de stockage.

Un des problèmes résolu par le procédé objet de l'invention est d'homogénéiser le mélange dans le moyen de stockage puis de le transvaser dans l'appareillage à haute tension sans aucune perte d'homogénéité.

Les inventeurs de la présente invention ont alors mis au point une solution permettant de résoudre les problèmes soulevés ci-dessus.

La présente invention a pour objet un procédé de distribution d'un mélange gazeux liquéfié isolant électrique vers un appareillage électrique à haute tension depuis un moyen de stockage contenant un mélange gazeux isolant, ledit procédé comprenant les étapes suivantes :
- Etape a) : chauffage dudit mélange gazeux isolant jusqu'à une température telle que le contenu du moyen de stockage soit un fluide homogène;
- Etape b) : Prélèvement du mélange isolant issu de l'étape a) pour remplir un appareillage électrique à haute tension en rehaussant la température dudit mélange issu de l'étape a) ;
caractérisé en ce que, pendant l'étape b), on applique une consigne de régulation à pression variable, calculée en temps réel à partir de la pesée du moyen de stockage, quand la variation de la consigne de pression est inférieure à 0,2 bar pour 1 kg/m³ de variation de la masse volumique, puis on applique une consigne de régulation à température constante jusqu'à ce que le moyen de stockage soit vidé de son contenu.

Selon d'autres modes de réalisation, l'invention a aussi pour objet :
- Un procédé tel que défini ci-dessus, caractérisé en ce que l'étape a) consiste en un chauffage dudit mélange gazeux isolant jusqu'à une température supérieure ou égale à sa température critique afin d'obtenir un fluide supercritique homogène à l'intérieur dudit moyen de stockage.
- Un procédé tel que défini ci-dessus, caractérisé en ce que, pendant l'étape b), le mélange isolant subit une détente jusqu'à une pression comprise entre 0 bar à 12 bars relatifs, de préférence de 5 bars à 10 bars relatifs.
- Un procédé tel que défini ci-dessus, caractérisé en ce que la température du mélange isolant issu de l'étape a) est élevée à une température comprise entre 65°C et 90°C pendant le prélèvement effectué lors de l'étape b).
- Un procédé tel que défini ci-dessus, caractérisé en ce que la pression à l'intérieur du moyen de stockage entre l'étape a) et l'étape b) est comprise entre 15 bars et 90 bars relatifs.
- Un procédé tel que défini ci-dessus, caractérisé en ce que la température du mélange isolant à l'intérieur du moyen de stockage entre l'étape a) et l'étape b) est comprise entre 40°C et 65°C.
- Un procédé tel que défini ci-dessus, caractérisé en ce que ledit moyen de stockage comporte des moyens de chauffage constitués par des moyens d'induction électromagnétique capables de chauffer le mélange isolant à l'intérieur dudit moyen de stockage.
- Un procédé tel que défini ci-dessus, caractérisé en ce que le mélange gazeux isolant comporte au moins 80% molaire de CO₂ dans le cas d'un mélange bi composants et en ce qu'il comporte au moins 50% molaire dans le cas de mélanges comprenant au moins trois composants.
- Un procédé tel que défini ci-dessus, caractérisé en ce que le mélange isolant comprend au moins un composant choisi parmi la famille des fluoronitriles ayant au moins quatre atomes de carbone.
- Un procédé tel que défini ci-dessus, caractérisé en ce que le mélange isolant comprend entre 2% et 20% molaire dudit composant choisi parmi la famille des fluoronitrile ayant au moins quatre atomes de carbone.
- Un procédé tel que défini ci-dessus, caractérisé en ce que ledit moyen de stockage a un volume de stockage dudit mélange isolant compris entre 30 L et 700 L.
- Un procédé tel que défini ci-dessus,, caractérisé en ce que, lors de l'étape b), le débit du prélèvement du mélange isolant issu de l'étape a) est compris entre 10 Nm³/h et 50 Nm³/h de préférence entre 15 et 30.

Le normo mètre cube, anciennement noté normaux-mètres cubes ou encore mètre cube normal ou encore cube normo mètre, ou encore normo cube mètre, de symbole : Nm³ ou parfois m³(n), est une unité de mesure de quantité de gaz qui correspond au contenu d'un volume d'un mètre cube, pour un gaz se trouvant dans les conditions normales de température et de pression (0 ou 15 ou plus rarement 20°C selon les référentiels et 1 atm, soit 101 325 Pa). Pour un gaz pur, un *normo mètre cube* correspond à environ 44,6 moles de gaz.

Il s'agit donc d'un procédé de régulation de la chauffe de moyens de stockage de mélanges liquéfiés afin de rendre ces mélanges homogènes avant et pendant leur transvasement. Ce procédé de régulation de la chauffe est utile et efficace pendant toute la durée du transvasement, c'est-à-dire de l'état *moyen de stockage plein* jusqu'à l'état *moyen de stockage vide.*

Le fait de chauffer le moyen de stockage permet de dépasser la température critique du mélange et d'obtenir un mélange diélectrique homogène *in-situ.*

Quand la masse volumique du mélange à l'intérieur du stockage ne permet plus d'entretenir l'état de fluide supercritique, la présente invention permet de maintenir le fluide en phase gazeuse, ce qui le rend intrinsèquement homogène.

L'invention permet de remplir un appareillage haute-tension à partir d'un moyen de stockage de mélange de gaz diélectriques liquéfiés, sans altération de la proportion initiale du mélange, aux conditions de température et de pression aptes au remplissage (10°C à 30°C et 0 à 12 bars relatifs), à des valeurs de débits suffisantes pour l'usage final (supérieur à 15 Nm³/h).

La solution pour rendre le mélange homogène consiste à chauffer le moyen de stockage.

Pour ce faire, l'invention combine un ensemble de solutions de régulation de la chauffe du moyen de stockage de façon à respecter toutes les contraintes et à surmonter toutes les difficultés exposées préalablement.

Ces solutions de régulation de la chauffe fonctionnent de la façon suivante :
1. Régulation de la chauffe du moyen de stockage sur consigne de pression, celle-ci étant variable et calculée en temps réel à partir de la pesée, quand la variation de la consigne de pression est inférieure à 0,2 bar pour 1 kilogramme par mètre cube de variation de la masse volumique (autrement dit, quand la dérivée de la consigne de pression en fonction de la masse volumique est inférieure à 0,2 bar.kg⁻¹.m³).
2. Régulation de la chauffe du moyen de stockage sur consigne de température constante, quand la variation de la consigne de pression est supérieure à 0,2 bar pour 1 kilogramme par mètre cube de variation de la masse volumique (autrement dit, quand la dérivée de la consigne de pression en fonction de la masse volumique est supérieure à 0,2 bar.kg⁻¹.m³).
3. Calcul de la pression de consigne de l'étape 1 tel que la température reste inférieure à la température maximale admissible par le moyen de stockage, tel que la pression reste inférieure à la pression maximale admissible par le moyen de stockage, et tel que le couple pression & température ne conduise jamais à la recondensation du mélange.

Le principe d'homogénéisation du mélange diélectrique mis en œuvre dans le procédé objet de la présente invention est de chauffer le moyen de stockage jusque dans le domaine supercritique. Les propriétés des fluides supercritiques (grande énergie interne, viscosité faible) permettent de garantir l'homogénéisation des fluides entre eux.

Les fluides supercritiques ont des propriétés proches des gaz et des liquides. Leur viscosité et leur agitation moléculaire est proche de celle des gaz. Un mélange en phase supercritique sera donc intrinsèquement homogène.

L'état supercritique peut être atteint par dépassement de la température critique et de la pression critique du mélange. Toutefois, cette chauffe doit être régulée de façon à ne dépasser, ni la température, ni la pression de conception du moyen de stockage.

Deux problématiques apparaissent pour assurer l'homogénéisation du mélange lors du prélèvement de celui-ci pour remplir l'appareillage haute tension:
- entretenir l'homogénéité du mélange au sein du moyen de stockage malgré la réduction de masse volumique due à la consommation ;
- rendre le mélange apte à son utilisation à une pression et température garantissant l'absence de recondensation et donc, de perte d'homogénéité.

Au fil de la consommation du mélange, la masse volumique va décroitre et nécessiter une plus grande température de chauffe. Mais cette température est limitée par la température de conception du moyen de stockage (en général 65°C).

La détente du mélange pour l'abaisser à la pression d'utilisation va refroidir le fluide par effet Joule-Thomson. L'invention permet de chauffer le fluide en aval du moyen de stockage et en amont de la détente de façon à compenser cette baisse de température. Cette solution permet de conserver un débit très élevé.

Le procédé objet de la présente invention est basé sur l'ajustement de la pression dans le moyen de stockage en contrôlant la chauffe, de façon à passer de l'état supercritique à la phase gazeuse sans transiter dans la zone de condensation.

Cet ajustement de la pression se fait à partir de la masse volumique calculée en temps réel (pesage dynamique du moyen de stockage).

Le mélange dans le moyen de stockage est donc à température et pression élevées (température supérieure à la température ambiante et quelques dizaines de bars). Une simple détente ne permet pas de garantir l'homogénéité car dans bien des cas, elle s'accompagne de recondensation partielle du mélange.

De plus, l'effet Joule-Thomson du mélange conduirait à une température du fluide très basse après détente.

Le procédé objet de la présente invention est basé sur la chauffe du mélange avant soutirage de façon à ensuite pouvoir le détendre en échappant à la zone de condensation.

Les valeurs de chauffe et de détente dépendent des propriétés physiques du mélange.

Le mélange gazeux typiquement mis en œuvre dans le procédé objet de la présente invention pour la distribution de mélanges liquéfiés homogènes correspond à du CO₂ et à du Novec®, marque déposée par 3M. Par exemple le mélange comprend 7% mol en Novec® (la plage de mélange peut par exemple comprendre de 2% mol à 20% mol de Novec®).

## Revendications

1. Procédé de distribution d'un mélange gazeux liquéfié isolant électrique vers un appareillage électrique à haute tension depuis un moyen de stockage contenant un mélange gazeux isolant, ledit procédé comprenant les étapes suivantes :
- Etape a) : chauffage dudit mélange gazeux isolant jusqu'à une température supérieure ou égale à sa température critique afin d'obtenir un fluide supercritique homogène à l'intérieur dudit moyen de stockage;
- Etape b) : Prélèvement du mélange isolant issu de l'étape a) pour remplir un appareillage électrique à haute tension en rehaussant la température dudit mélange issu de l'étape a) ;
**caractérisé en ce que**, pendant l'étape b), on applique une consigne de régulation à pression variable, calculée en temps réel à partir de la pesée du moyen de stockage, quand la variation de la consigne de pression est inférieure à 0,2 bar pour 1 kg/m³ de variation de la masse volumique, puis on applique une consigne de régulation à température constante jusqu'à ce que le moyen de stockage soit vidé de son contenu.

2. Procédé selon la revendication précédente **caractérisé en ce que**, pendant l'étape b), le mélange isolant subit une détente jusqu'à une pression comprise entre 0 bar à 12 bars relatifs, de préférence de 5 bars à 10 bars relatifs.

3. Procédé selon la revendication précédente, **caractérisé en ce que** la température du mélange isolant issu de l'étape a) est élevée à une température comprise entre 65°C et 90°C pendant le prélèvement effectué lors de l'étape b).

4. Procédé selon l'une des revendications précédentes, **caractérisé en ce que** la pression à l'intérieur du moyen de stockage entre l'étape a) et l'étape b) est comprise entre 15 bars et 90 bars relatifs.

5. Procédé selon l'une des revendications précédentes, **caractérisé en ce que** la température du mélange isolant à l'intérieur du moyen de stockage entre l'étape a) et l'étape b) est comprise entre 40°C et 65°C.

6. Procédé selon l'une des revendications précédentes, **caractérisé en ce que** ledit moyen de stockage comporte des moyens de chauffage constitués par des moyens d'induction électromagnétique capables de chauffer le mélange isolant à l'intérieur dudit moyen de stockage.

7. Procédé selon l'une des revendications précédentes, **caractérisé en ce que** le mélange gazeux isolant comporte au moins 80% molaire de CO₂ dans le cas d'un mélange bi composants et **en ce qu'**il comporte au moins 50% molaire dans le cas de mélanges comprenant au moins trois composants.

8. Procédé selon la revendication précédente, **caractérisé en ce que** le mélange isolant comprend au moins un composant choisi parmi la famille des fluoronitriles ayant au moins quatre atomes de carbone.

9. Procédé selon la revendication précédente, **caractérisé en ce que** le mélange isolant comprend entre 2% et 20% molaire dudit composant choisi parmi la famille des fluoronitrile ayant au moins quatre atomes de carbone.

10. Procédé selon l'une des revendications précédentes, **caractérisé en ce que** ledit moyen de stockage a un volume de stockage dudit mélange isolant compris entre 30 L et 700 L.

11. Procédé selon l'une des revendications précédentes, **caractérisé en ce que**, lors de l'étape b), le débit du prélèvement du mélange isolant issu de l'étape a) est compris entre 10 Nm³/h et 50 Nm³/h de préférence entre 15 Nm³/h et 30 Nm³/h.

## Patentansprüche

1. Verfahren zur Verteilung eines elektrisch isolierenden verflüssigten Gasgemischs auf eine elektrische Hochspannungsvorrichtung aus einem Speichermittel, das ein isolierendes Gasgemisch enthält, wobei das Verfahren die folgenden Schritte umfasst:
Schritt a): Erhitzen des isolierenden Gasgemischs auf eine Temperatur, die größer oder gleich seiner kritischen Temperatur ist, um ein homogenes überkritisches Fluid im Inneren des Speichermittels zu erhalten;
Schritt b): Entnehmen des isolierenden Gemischs aus Schritt a) zum Befüllen einer elektrischen Hochspannungsvorrichtung durch Erhöhen der Temperatur des Gemischs aus Schritt a);
**dadurch gekennzeichnet, dass** während des Schrittes b) ein variabler Druckregelungssollwert, der in Echtzeit aus dem Wiegen des Speichermittels berechnet wird, angewendet wird, wenn die Variation des Drucksollwerts weniger als 0,2 bar für 1 kg/m³ der Variation der Volumenmasse beträgt, dann ein konstanter Temperaturregelungssollwert angewendet wird, bis das Speichermittel von seinem Inhalt geleert ist.

2. Verfahren nach dem vorstehenden Anspruch, **dadurch gekennzeichnet, dass** während des Schritts b) das isolierende Gemisch eine Expansion bis zu einem Druck im Bereich zwischen 0 bar bis 12 bar relativ, bevorzugt von 5 bar bis 10 bar relativ, durchläuft.

3. Verfahren nach dem vorstehenden Anspruch, **dadurch gekennzeichnet, dass** die Temperatur des aus dem Schritt a) resultierenden isolierenden Gemischs während des in Schritt b) durchgeführten Entnehmens auf eine Temperatur zwischen 65 °C und 90 °C erhöht wird.

4. Verfahren nach einem der vorstehenden Ansprüche, **dadurch gekennzeichnet, dass** der Druck im Inneren des Speichermittels zwischen dem Schritt a) und dem Schritt b) im Bereich zwischen 15 bar und 90 bar relativ liegt.

5. Verfahren nach einem der vorstehenden Ansprüche, **dadurch gekennzeichnet, dass** die Temperatur des isolierenden Gemischs im Inneren des Speichermittels zwischen dem Schritt a) und dem Schritt b) im Bereich zwischen 40 °C und 65 °C liegt.

6. Verfahren nach einem der vorstehenden Ansprüche, **dadurch gekennzeichnet, dass** das Speichermittel Aufheizmittel aufweist, die aus elektromagnetischen Induktionsmitteln bestehen, die in der Lage sind, das isolierende Gemisch im Inneren des Speichermittels zu erhitzen.

7. Verfahren nach einem der vorstehenden Ansprüche, **dadurch gekennzeichnet, dass** das isolierende Gasgemisch bei einem Zweikomponentengemisch mindestens 80 Mol-% CO₂ umfasst, und dadurch, dass es bei Gemischen mit mindestens drei Komponenten mindestens 50 Mol-% enthält.

8. Verfahren nach dem vorstehenden Anspruch, **dadurch gekennzeichnet, dass** das isolierende Gemisch mindestens eine Komponente umfasst, die aus der Familie der Fluoronitrile mit mindestens vier Kohlenstoffatomen ausgewählt ist.

9. Verfahren nach dem vorstehenden Anspruch, **dadurch gekennzeichnet, dass** das isolierende Gemisch zwischen 2 Mol-% und 20 Mol-% der Komponente umfasst, die aus der Familie der Fluoronitrile mit mindestens vier Kohlenstoffatomen ausgewählt ist.

10. Verfahren nach einem der vorstehenden Ansprüche, **dadurch gekennzeichnet, dass** das Speichermittel ein Speichervolumen des isolierenden Gemischs zwischen 30 L und 700 L aufweist.

11. Verfahren nach einem der vorstehenden Ansprüche, **dadurch gekennzeichnet, dass** in Schritt b) der Durchsatz der Entnahme des aus Schritt a) resultierenden isolierenden Gemischs im Bereich zwischen 10 Nm³/h und 50 Nm³/h, bevorzugt zwischen 15 Nm³/h und 30 Nm³/h liegt.

## Claims

1. Method for distributing an electrically insulating liquefied gaseous mixture to a high-voltage electrical apparatus from a storage means containing an insulating gaseous mixture, said method comprising the following steps:
- Step a): heating said insulating gaseous mixture up to a temperature greater than or equal to the critical temperature thereof in order to obtain a homogenous supercritical fluid inside said storage means;
- Step b): sampling the insulating mixture at the end of step a) to fill a high-voltage electrical apparatus by increasing the temperature of said mixture at the end of step a);
**characterised in that**, during step b), a control setpoint with a variable pressure is applied, calculated in real time from the weight of the storage means, when the variation of the pressure setpoint is less than 0.2 bars per 1kg/m³ of variation of the density, then a control setpoint with a constant temperature is applied, until the storage means is emptied of the content thereof.

2. Method according to the preceding claim, **characterised in that**, during step b), the insulating mixture undergoes an expansion until a pressure of between 0 bars and 12 relative bars, preferably from 5 bars to 10 relative bars.

3. Method according to the preceding claim, **characterised in that** the temperature of the insulating mixture at the end of step a) is increased to a temperature of between 65°C and 90°C during the sampling carried out during step b).

4. Method according to one of the preceding claims, **characterised in that** the pressure inside the storage means between step a) and step b) is of between 15 bars and 90 relative bars.

5. Method according to one of the preceding claims, **characterised in that** the temperature of the insulating mixture inside the storage means between step a) and step b) is of between 40°C and 65°C.

6. Method according to one of the preceding claims, **characterised in that** said storage means comprises heating means constituted by electromagnetic induction means capable of heating the insulating mixture inside said storage means.

7. Method according to one of the preceding claims, **characterised in that** the insulating gaseous mixture comprises at least 80% molar of CO₂ in the case of a two-component mixture and **in that** it comprises at least 50% molar in the case of mixtures comprising at least three components.

8. Method according to the preceding claim, **characterised in that** the insulating mixture comprises at least one component selected from among the family of fluoro-nitriles having at least four carbon atoms.

9. Method according to the preceding claim, **characterised in that** the insulating mixture comprises between 2% and 20% molar of said component selected from among the family of fluoro-nitriles having at least four carbon atoms.

10. Method according to one of the preceding claims, **characterised in that** said storage means has a storage volume of said insulating mixture of between 30L and 700L.

11. Method according to one of the preceding claims, **characterised in that**, during step b), the flow of the sampling of the insulating mixture at the end of step a) is of between 10Nm³/h and 50Nm³/h, preferably between 15Nm³/h and 30Nm³/h.
